# EUROPÄISCHE PATENTSCHRIFT

(11) **EP 2 770 308 B1**
(45) Veröffentlichungstag und Bekanntmachung des Hinweises auf die Patenterteilung: **27.04.2016**
(21) Anmeldenummer: 14152395.1
(22) Anmeldetag: 24.01.2014
(51) Int. Cl.: G01F 23/00, G01F 23/292

(54) **Optoelektronischer Füllstandssensor**
Optoelectronic fill level sensor
Capteur de niveau de remplissage optoélectronique

(30) Priorität: 26.02.2013 DE 102013101889
(43) Veröffentlichungstag der Anmeldung: 27.08.2014
(73) Patentinhaber: SICK AG, 79183 Waldkirch (DE)
(72) Erfinder: Sonntag, Dennis, 76571 Gaggenau (DE); Weber, Thomas, 77960 Seelbach (DE)
(74) Vertreter: Hehl, Ulrich

(56) Entgegenhaltungen:
- WO-A2-2008/024910
- DE-A1- 10 106 176
- DE-A1-102008 032 216
- GB-A- 2 147 697
- US-A1- 2011 026 015
- US-B1- 7 385 698

## Beschreibung

Die Erfindung betrifft einen optoelektronischen Füllstandssensor und ein Verfahren zur optischen Bestimmung eines Füllstands nach dem Oberbegriff von Anspruch 1 beziehungsweise 7.

Für die Füllstaridsmessung einer Flüssigkeit in einem Behälter sind verschiedene Verfahren bekannt. Soweit nicht mechanische Lösungen beispielsweise mit einem Schwimmer zum Einsatz kommen, basieren Füllstandssensoren in der Regel auf einem Signallaufzeitverfahren, bei dem ein Signal gegen die Oberfläche der Flüssigkeit ausgesandt und aus dessen Laufzeit auf den Abstand geschlossen wird. Die Signallaufzeitverfahren unterscheiden sich dabei vor allem in der Art des Signals.

Das Signal wird teilweise mittels einer Sonde geführt, welche in die Flüssigkeit hineinragt. Das gängige Verfahren mit einer Sonde ist die beispielsweise in EP 2 012 098 A1 erläuterte Zeitbereichsreflektometrie (TDR, Time Domain Reflectometry), in der die Laufzeit eines geführten Mikrowellenpulses gemessen wird. Ein optisches Verfahren mit einer Lichtleitersonde wird in EP 2 418 315 A2 beschrieben. Eine Art Lichtsonde bildet auch eine rotierende Bildsensorzeile, die gemäß einer kurz erwähnten Ausführungsform der DE 199 19 925 A1 zur Füllstandsmessung von Schnittgut um 180° oder 360° um die Achse eines Silos gedreht wird.

Die Verwendung einer Sonde ist nur möglich, wenn die Flüssigkeit die Sonde nicht angreift und umgekehrt die Sonde beispielsweise in Lebensmittelanwendungen mit entsprechenden Hygieneanforderungen keine unerwünschten Ablagerungen ansammelt. Ansonsten wird eine berührungslose Messung bevorzugt, in der das Signal frei abgestrahlt und wieder empfangen wird. Gängig sind hier vor allem Radarsensoren und Ultraschallsensoren. Radarsensoren sind vergleichsweise teuer, unterliegen Störungen durch die Behältergeometrie und weisen Totzonen am Behälterrand auf. Ultraschallsensoren reagieren empfindlich auf Umgebungsbedingungen wie Temperatur, Luftfeuchtigkeit, Druck sowie Lärm und Maschinengeräusche. Störschichten wie Gasblasen oder Schaum können überdies den Ultraschall absorbieren.

Eine Alternative bieten hier berührungslose optische Verfahren, weil sie ganz andere Abhängigkeiten zeigen als Radar oder Ultraschall. Bekannt sind Extinktionsmessungen, die aber Kenntnisse über die physikalisch-chemischen Eigenschaften der Flüssigkeit erfordern und für Schüttgüter, Pasten oder stark eingetrübte Flüssigkeiten ungeeignet sind.

Analog zum Radar kann auch mit Licht anhand einer Lichtlaufzeit ein Abstand bestimmt werden, was manchmal als LIDAR (Light Detection and Ranging) bezeichnet wird. Misst man aber mit einem entsprechenden Lichttaster den Abstand zur Oberfläche der Flüssigkeit, so ergibt sich ein Problem, wenn das Licht nicht senkrecht auf die Oberfläche trifft und deshalb der Lichttaster die gerichtete, spiegelnde Reflexion oder Direktreflexion nicht empfängt. Ein solcher Lichttaster muss demnach sehr exakt ausgerichtet bleiben und verliert bei unruhigen Oberflächen mit Wellenbildung das Signal der spiegelnden Reflexion. Bei trüben Flüssigkeiten kann noch eine ungerichtete, diffuse Reflexion ausgewertet werden, aber bei klaren Flüssigkeiten ist der Sensor dann nicht mehr messfähig.

Die US 8 159 660 B2 beschreibt eine pulsbasierte Lichtlaufzeitbestimmung zur Füllstandsmessung. Dabei wird eine Reihe von Maßnahmen zur Verbesserung der Messung beschrieben. Zunächst wird über eine Vielzahl von Messungen gemittelt, um ein besseres Signal-Rausch-Verhältnis zu gewinnen. Die Auflösung der akquirierten Signalverläufe wird durch versetzte Abtastung (interleaved sampling) erhöht. Der reflektierte Puls wird dann mittels Funktionsfits einer erwarteten Pulsform in dem Signalverlauf erkannt, um über den Empfangszeitpunkt in dem Signalverlauf mit einer höheren Auflösung als die Abtastrate zu interpolieren. Der Funktionsfit hilft auch, den an der Oberfläche des Mediums reflektierten Puls von Reflexionen an Dunst oder Staub im Behälter zu unterscheiden, die eine breitere Pulsform zeigen. Auch ein Reflex vom Behälterboden kann anhand von dessen bekannter Pulsform eliminiert werden. Sämtliche Messinformation, die nicht dem an der Oberfläche reflektierten Puls zugeordnet werden kann, wird demnach in der US 8 159 660 B2 einfach verworfen. In einer Ausführungsform werden Abstände zur Oberfläche des Mediums nicht nur in senkrechter, sondern in weiteren Richtungen bestimmt. Das dient dann aber nur dazu, eine konkave oder konvexe Oberflächenform eines Schüttguts ortsaufgelöst zu erfassen.

In der US 8 302 473 B2 werden Sender und Empfänger eines lichtlaufzeitmessenden Sensors V-förmig angeordnet. Das ändert aber nichts an dem Problem, dass bei Dejustage oder Wellenbildung das Signal nicht mehr im Empfänger ankommt.

Die US 2011/026015 A1 offenbart einen optoelektronischen Füllstandssensor gemäß der Präambel des Anspruchs 1.

Es ist daher Aufgabe der Erfindung, eine verbesserte optische Füllstandsmessung zu ermöglichen.

Diese Aufgabe wird durch einen optoelektronischen Füllstandssensor und ein Verfahren zur optischen Bestimmung eines Füllstands nach Anspruch 1 beziehungsweise 7 gelöst. Dabei geht die Erfindung von dem Grundgedanken aus, einen optoelektronischen Sensor oberhalb eines Mediums in einem Behälter derart zu montieren, dass dessen Sendelichtstrahl im Wesentlichen nach unten auf die Oberfläche des Mediums fällt. Aufgrund einer Abstandsmessung mittels eines Lichtlaufzeitverfahrens kann aus der bekannten Montagehöhe des Sensors und Geometrie des Behälters ein Füllstand berechnet werden. Diese Abstandsmessung erfolgt bezüglich mehrerer, d.h. zumindest zwei oder auch deutlich mehr Messpunkten, um zusätzliche Messinformation zu gewinnen. Letztlich wird damit die Messung überbestimmt und dadurch robust gegen Störeinflüsse wie Dejustage oder Wellenbildung. Unter einem Messpunkt soll natürlich kein mathematischer Punkt verstanden werden, denn die Ortsauflösung ist durch den Querschnitt des Sendelichtstrahls festgelegt. Eine gewisse Ausdehnung der Messpunkte führt zu einem sogar hilfreichen Mittelungseffekt.

Zu einem Füllstandswert tragen unterschiedliche Messinformationen alternativ oder gemeinsam bei. Der Abstand zu der Oberfläche wird unmittelbar ausgemessen, wenn dort der Sendelichtstrahl zurückgeworfen wird. Bei klaren Flüssigkeiten gibt es aber keine diffuse Remission in alle Richtungen gemäß dem Lambertschen Gesetz, sondern nur eine gerichtete spiegelnde Reflexion, die hier Direktreflexion genannt wird. Diese Direktreflexion wiederum wird nur empfangen, wenn die optischen Achsen von Lichtsender und Lichtempfänger in einer symmetrischen V-Anordnung zu der Orientierung der Oberfläche stehen, also insbesondere bei koaxialer Anordnung senkrecht zu der Oberfläche. Die zu den Messpunkten gemessenen Abstände werden also in der einen Alternative dahingehend ausgewertet, ob eine Direktreflexion empfangen wurde. In diesem Fall kann die Direktreflexion der Berechnung des Füllstandswerts zugrunde gelegt werden.

Bei einer Abweichung von den Bedingungen für eine Direktreflexion wird in einem klaren oder durchsichtigen Medium stattdessen eine Behälterreflexion von Boden oder Wänden des Behälters empfangen. Diese Behälterreflexion kann in einer zweiten Alternative für eine Berechnung des Füllstands genutzt werden. Der Boden und die vom Medium bedeckten Wände des Behälters erscheinen nämlich wegen der geringeren Lichtgeschwindigkeit in dem Medium für den Sensor weiter entfernt. Bei bekannter Behältergeometrie und in Kenntnis der verzögerten Lichtgeschwindigkeit kann deshalb auch aus dem gemessen Abstand des Bodens und der Wände auf den Füllstand geschlossen werden. Diese Füllstandsmessung aus einer Behälterreflexion wird nun beispielsweise herangezogen, wenn keine Direktreflexion identifiziert werden kann, und kann ansonsten zur Plausibilisierung und Korrektur eines aus einer Direktreflexion bestimmten Füllstandes genutzt werden.

Die Erfindung hat den Vorteil, dass der Füllstand für klare Flüssigkeiten messbar ist. Da die Messung berührungslos erfolgt, sind Hygieneanforderungen und aggressive oder abrasive Medien unproblematisch. Der erfindungsgemäße Füllstandssensor ist wegen seiner mehreren Messpunkte sehr robust.

Der Füllstandssensor ist bevorzugt als Laserscanner mit einer beweglichen Ablenkeinheit zur periodischen Ablenkung des Sendelichtstrahls in dem Behälter und einer Winkelmesseinheit zur Erzeugung von Winkelpositionssignalen in Abhängigkeit von einer Winkelstellung der Ablenkeinheit ausgebildet. Die mehreren Messpunkte werden somit von den einzelnen Abtastungen in bestimmten Winkelschritten gebildet. Um die Abhängigkeit von den jeweiligen Erfassungswinkeln herauszurechnen, können die gemessenen Abstände auf ein Lot zu der Oberfläche des Mediums projiziert werden. Der Winkelbereich sollte beschränkt werden, so dass nur Messinformationen von der Oberfläche des Mediums beziehungsweise dem Boden oder den von Medium bedeckten Wänden des Behälters erfasst werden. Ein Laserscanner erlaubt im Hinblick auf die Augensicherheit im Vergleich mit einem eindimensionalen Lichttaster eine hohe Sendeenergie, da der gleiche Messpunkt erst wieder nach einer vollen Umdrehung erfasst wird. Alternativ zu einem Laserscanner können mehrere eindimensionale Lichttaster auf mehrere Messpunkte gerichtet oder ein kamerabasierter Sensor mit einem Bildsensor verwendet werden, welcher durch ein bekanntes 3D-Lichtlaufzeitverfahren wie PMD (Photonmischdetektion) jeweilige Abstände in den Messpunkten bestimmt.

Die Auswertungseinheit ist dafür ausgebildet, aus den Abständen zu den Messpunkten ein positionsabhängiges Abstandsprofil zu bestimmen. Bei diesem Abstandsprofil handelt es sich somit um eine Funktion des jeweils gemessenen Abstands in Abhängigkeit des Ortes. Die gemessenen Abstände sind eine Mischung aus Direktreflexionen an der Mediumsoberfläche, im Falle nicht klarer Medien auch diffuser Remissionen an Oberfläche oder in dem Medium befindlichen Partikeln sowie Reflexionen von Behälterwand und -boden. Der Ort wiederum wird vorzugsweise über eine horizontale Ebene des Behälters entsprechend der Oberfläche des Mediums beziehungsweise eine Linie darin angegeben. Im Falle eines Laserscanners wird der Ort durch die Scanwinkel festgelegt, wobei die Messpunkte gemeinsam eine Schnittlinie zwischen Scanebene und Mediumsoberfläche beziehungsweise Behälter bilden.

Die Auswertungseinheit ist dafür ausgebildet, Direktreflexionen als Extrema in dem Abstandsprofil zu erkennen. Das Extremum ist ein Maximum oder Minimum je nachdem, ob man den Füllstand oder den Abstand zwischen Füllstandssensor und Medium betrachtet. Im Falle eines Laserscanners wird sich meist ein globales Extremum bei dem senkrecht auftreffenden Strahl ausbilden. Je nach Wellenbildung ergibt sich aber eine Verschiebung, oder es entstehen lokale Extrema durch zusätzliche Direktreflexionen. Die Auswertung erfolgt vorzugsweise nach einer Kalibrierung durch Differenzbildung mit einer sogleich erläuterten Leerkurve.

Um Behälterreflexionen zu erkennen, wird in einem Einlernvorgang bei leerem Behälter eine Leerkurve als Referenz für im Betrieb bestimmte Abstände oder Abstandsprofile ermittelt. Die Leerkurve wird beispielsweise durch Differenzbildung mit dem Abstandsprofil berücksichtigt. Da in dem Einlernvorgang keine Ansprechzeit beachtet werden muss, kann die Leerkurve über eine große Zahl von Messvorgängen gemittelt werden, um Rauscheffekte zu unterdrücken.

Die Auswertungseinheit ist bevorzugt dafür ausgebildet, aus dem Empfangssignal eine jeweilige Intensität zu den mehreren Messpunkten zu bestimmen und den Füllstand als mit den Intensitäten gewichteten Mittelwert der Abstände bei den Direktreflexionen zu bestimmen. Die Intensitäten bieten für jeden Messpunkt neben dem Abstand eine zusätzliche Messinformation. Je größer die Intensität ist, desto verlässlicher kann auch der gemessene Abstand als Füllstandsmessung gewertet werden. Dies wird durch eine entsprechend gewichtete Mittelung erfasst. Alternativ kann aber auch unmittelbar und gleichgewichtet über die Direktreflexionen gemittelt werden.

Die Auswertungseinheit ist dafür ausgebildet, einen Abstand größer als einen durch die Geometrie des Behälters vorgegebenen Maximalabstand als Behälterreflexion zu erkennen. Ein solcher Abstand ist sicherlich nicht aufgrund einer Direktreflexion gemessen worden, da das Medium physisch nicht weiter beabstandet sein kann als der Behälter. Wurden die gemessenen Abstände durch Differenzbildung mit der Leerkurve kompensiert, so werden die entsprechenden Abstandswerte negativ und so schnell erkannt. Durch die geringere Lichtgeschwindigkeit im Medium ist der Behälter scheinbar weiter weggerückt. Messwerte, die als Behälterreflexion erkannt sind, scheiden als Kandidaten für eine Direktreflexion aus und können gesondert ausgewertet werden.

Die Auswertungseinheit ist bevorzugt dafür ausgebildet, anhand von mindestens einer Direktreflexion und mindestens einer Behälterreflexion den Brechungsindex des Mediums zu berechnen. Aus dem durch die Direktreflexion gemessenen Abstand der Oberfläche des Mediums ist nämlich die tatsächliche Länge des Lichtwegs durch das Medium bekannt, und aus der Behälterreflexion der scheinbare Abstand. Aus dem Verhältnis ergibt sich die Verzögerung der Lichtgeschwindigkeit und damit auch die optische Dichte beziehungsweise der Brechungsindex des Mediums.

Die Auswertungseinheit ist bevorzugt dafür ausgebildet, den Füllstand aus einer Behälterreflexion und dem Brechungsindex des Mediums zu bestimmen. Der Brechungsindex bestimmt den Faktor, um den die Lichtgeschwindigkeit in dem Medium verzögert ist, und damit kann aus der in der Behälterreflexion erfassten scheinbaren Verschiebung von βehälterwand oder -boden auf den Füllstand geschlossen werden, sofern die tatsächliche Geometrie des Behälters parametriert oder in einer Leermessung bestimmt wurde. Ebenso kann der Brechungsindex parametriert, vorab oder in einer Situation gemessen werden, in der sowohl Direktreflexionen als auch Behälterreflexionen erfasst werden.

Die Auswertungseinheit ist bevorzugt dafür ausgebildet, eine Verunreinigung im optischen Pfad bis zu einer Oberfläche des Mediums daran zu erkennen, dass bei einem Messpunkt außerhalb einer Direktreflexion der Abstand kleiner ist als ein durch die Geometrie vorgegebener Mindestabstand. Solcher Verunreinigungen werden insbesondere von Kondensat oder Beschlag an einer Frontscheibe des Füllstandssensors verursacht. Sie werden erkannt, weil außerhalb einer Direktreflexion nicht wie erwartet der bezüglich der Lichtlaufzeit nach hinten verschobene Behälter gemessen wird. Sie werden alternativ auch erkannt, weil Abstände gemessen werden, die kleiner sind als ein derzeit plausibler Füllstand, beispielsweise sprunghaft kleiner als die letzte Messung oder sogar kleiner als bei einem maximalen Füllstand. Ein zweiter Test kann anhand der Intensität erfolgen, wenn diese nämlich zu schwach für eine Direktreflexion an der Oberfläche des Mediums, aber zu nahe für eine Behälterreflexion ist. Wurde an einem Messpunkt eine Verunreinigung erkannt, so wird der zugehörige Abstand nicht für die Füllstandsbestimmung berücksichtigt. Man kann außerdem durch die Verunreinigungen bedingte Laufzeitverzögerung korrigieren. Der Begriff Verunreinigung soll an dieser Stelle so weit aufgefasst werden, dass auch Störreflexe wie an Einbauten, Rührern oder dergleichen umfasst sind.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersichtsdarstellung eines optoelektronischen Füllstandssensors, der über einem Medium in einem Behälter montiert ist;
- Fig. 2: eine Blockdarstellung eines Laserscanners, der als Füllstandssensor eingesetzt werden kann;
- Fig. 3: ein beispielhafter ortsabhängiger Intensitätsverlauf und ein zugehöriges Abstandsprofil jeweils als Leer- und Messkurve;
- Fig. 4: ein mit einer Leerkurve korrigierter ortsabhängiger Intensitätsverlauf und ein zugehöriges Abstandsprofil; und
- Fig.5: ein weiteres Beispiel eines ortsabhängigen Intensitätsverlaufs und eines zugehörigen Intensitätsprofils jeweils als Leer- und Messkurve für den Fall eines Mediums mit einer darüber befindlichen Störschicht.

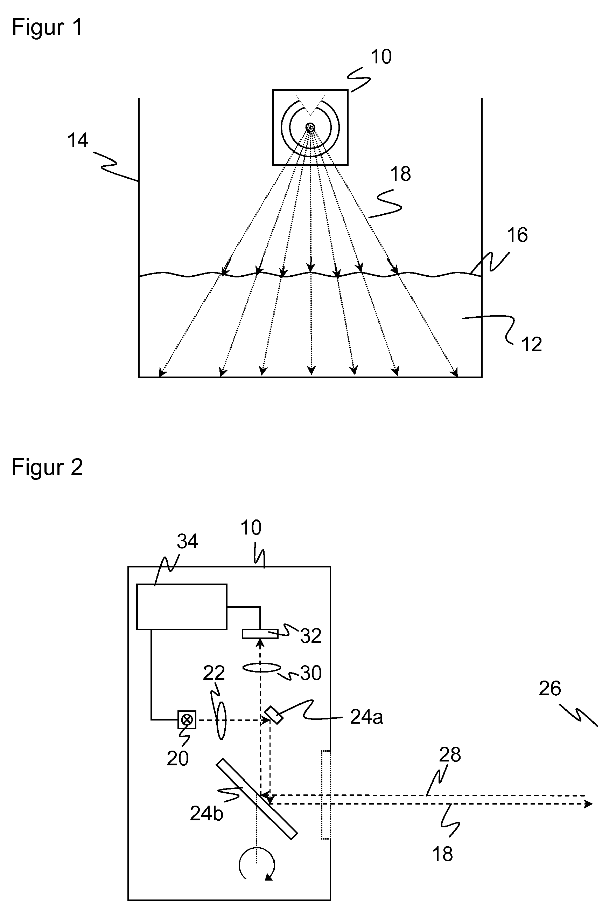

Figur 1 zeigt eine schematische Übersichtsdarstellung eines optoelektronischen Füllstandssensors 10, der über einem Medium 12 in einem Behälter 14 montiert ist. Der Füllstandssensor 10 ist in Figur 1 ein Laserscanner, der mit seiner Scanebene senkrecht zu einer Oberfläche 16 des Mediums 12 orientiert angebracht ist, ohne das Medium 12 zu berühren. Während einer Rotationsbewegung sendet der Laserscanner Sendelicht 18 in verschiedene Winkelrichtungen aus und misst dabei mit einem Lichtlaufzeitverfahren den Abstand zu der Oberfläche 16 beziehungsweise zu den Wänden und dem Boden des Behälters 14. Dabei wird der Füllstandssensor 10 so ausgerichtet, dass die optische Achse von mindestens einem Strahl des Sendelichts 18 der Flächennormalen der Oberfläche 16 entspricht. Das ist wegen der Rotationsbewegung vergleichsweise einfach zu gewährleisten, weil diese Bedingung zumindest innerhalb der Scanebene ohne besondere Maßnahmen stets durch einen der Strahlen erfüllt ist. Das Funktionsprinzip des Laserscanners wird weiter unten mit Bezugnahme auf Figur 2 erklärt.

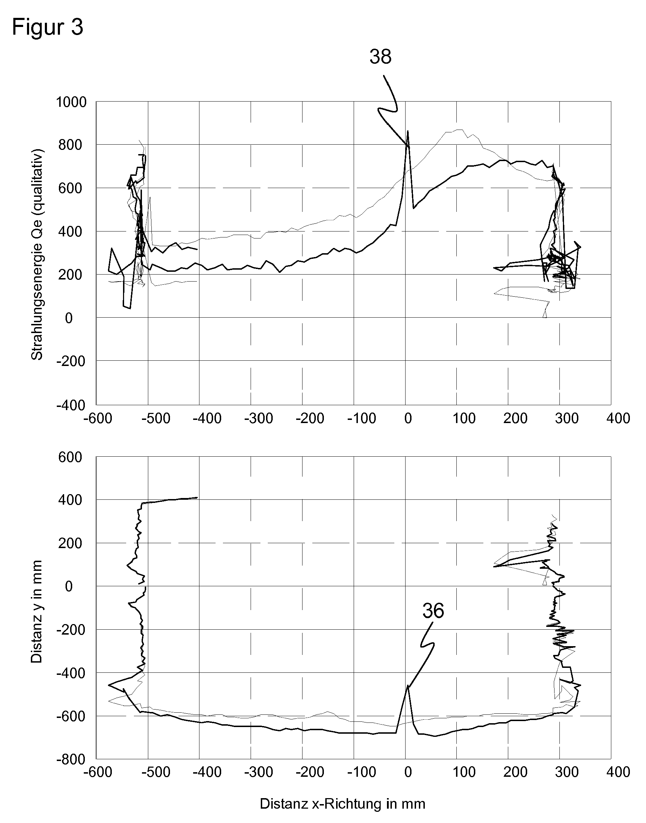

Ob dabei das Sendelicht 18 den Abstand zu der Oberfläche 16 oder zu dem Behälter 12 misst, hängt vom Auftreffwinkel an der Oberfläche 16 und von den optischen Eigenschaften des Mediums 12 ab. Die erfindungsgemäße Auswertung, die unter Bezugnahme auf die Figuren 3 bis 5 näher erläutert wird, erkennt aus den Messdaten, wo Sendelicht 18 in einer Direktreflexion von der Oberfläche 16 gespiegelt wird und wo Sendelicht 18 in das Medium 12 eindringt und erst als Behälterreflexion an dem Behälter reflektiert wird, und kann in beiden Fällen mit unterschiedlichen Auswertungen auf den Füllstand zurückschließen.

Die Erfindung wird am Beispiel des Laserscanners erläutert. Dies ist aber nicht einschränkend zu verstehen, denn für die Auswertung kommt es nur darauf an, Abstandswerte an mehreren Messpunkten zu erfassen. Diese Messinformation kann alternativ auch durch andere optoelektronische Sensoren gewonnen werden, etwa durch mehrere eindimensionale Lichttaster oder verschiedene Spielarten einer 3D-Kamera.

Figur 2 zeigt den als Laserscanner ausgebildeten Füllstandssensor 10 in einer Blockdarstellung. Ein Lichtsender 20, beispielsweise eine Laserlichtquelle, sendet den jeweiligen Sendelichtstrahl 18 aus, der durch eine Sendeoptik 22 kollimiert und über eine Ablenkeinheit 24a-b in den Behälter 14 beziehungsweise allgemein in eine Scanebene 26 gelenkt wird. Nach Reflexion oder Remission in der Scanebene 26 kehrt Empfangslicht 28 zu dem Füllstandssensor 10 zurück, wird von der Ablenkeinheit 24b über eine Empfangsoptik 30 auf einen Lichtempfänger 32 geführt und dort in ein elektrisches Empfangssignal gewandelt. Eine Auswertungseinheit 34 bestimmt aus dem Empfangssignal eine Lichtlaufzeit, um den Abstand zu einem Messpunkt zu ermitteln, an dem der Sendelichtstrahl 18 reflektiert oder remittiert wurde. Lichtlautzeitverfahren an sich, beispielsweise Pulsverfahren mit Aussenden von kurzen Lichtpulsen und Bestimmen eines Empfangszeitpunktes des reflektierten Lichtpulses oder Phasenverfahren mit Bestimmen einer Phasenverschiebung zwischen amplitudenmoduliertem Sendelicht und dem resultierenden Empfangslicht, werden als bekannt vorausgesetzt. Die entsprechende Auswertung erfolgt zumeist digital nach einer nicht dargestellten A/D-Wandlung, wobei auch analoge und gemischte Verfahren mit analoger Vorverarbeitung genutzt werden.

Die beispielsweise als Spiegel ausgebildete Ablenkeinheit 24a-b ist drehbar gelagert, so dass der Sendelichtstrahl 18 periodisch über die Scanebene 26 geführt wird. Dabei ist die drehbare Einheit mit der Ablenkeinheit 24a-b mit einem nicht gezeigten Encoder versehen, so dass die Winkellage stets bekannt ist. Auf diese Weise gewinnt der Füllstandssensor anhand der Winkellage und der Lichtlaufzeiten Abstandsprofile in seiner Scanebene 26. Es sind abweichende Aufbauten von Laserscannern bekannt, beispielsweise mit einem drehbaren Spiegelpolygonrad oder einem insgesamt drehbaren Optikkopf, die von der Erfindung ebenfalls umfasst sind.

Die Abstandsprofile entstehen zunächst in durch Winkel und Abstand bestimmten Polarkoordinaten, können aber problemlos in kartesische Koordinaten umgerechnet werden. Ebenso erfolgt anhand des jeweils bekannten Winkels eine Projektion auf das Lot zur Oberfläche 16, da sonst ein Abstandsanteil in der Ebene der Oberfläche 16 bei schräg auftreffendem Sendelicht 18 die Füllstandsmessung verzerrt.

Durch die Erfassung von zahlreichen Abstandswerten an unterschiedlichen Messpunkten während der Scanbewegung ist die Messung überbestimmt. Die unterschiedlichen Auftreffwinkel gewährleisten, dass auch bei Wellenbildung an der Oberfläche 16 zumindest einer oder einige der Sendelichtstrahlen 18 in einem Winkel auf das Medium 14 auftreffen, so dass eine Direktreflexion erfasst wird.

Als Referenz für eine Auswertung der Abstandsprofile erfolgt vorzugsweise eine Einlernphase beziehungsweise eine Kalibrierung, in der eine Leerkurve bei leerem Behälter 14 erfasst und als Referenz gespeichert wird. Die Leerkurve kann über viele Messungen gemittelt werden, um Rauscheffekte zu unterdrücken.

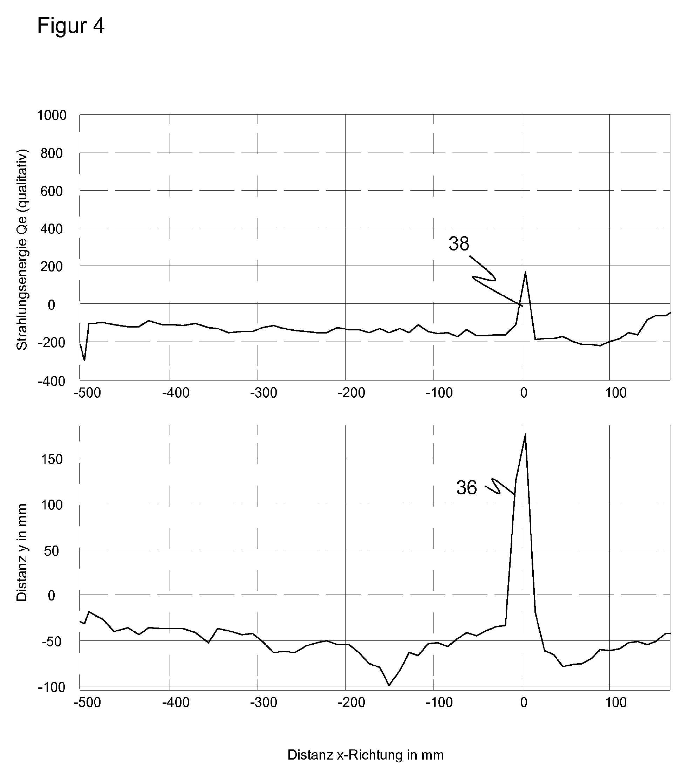

Figur 3 zeigt im unteren Teil ein beispielhaftes Abstandsprofil. Dabei wurden die Winkelschritte des Füllstandssensors 10 auf der X-Achse in eine kartesische Position umgerechnet. Für größere Winkel, die einem Sendelichtstrahl 18 entsprechen, der bereits in Richtung der Seitenwände ausgesandt wird, sind die Messwerte um 90° verdreht dargestellt, um den Behälter 12 zu veranschaulichen. Im oberen Teil zeigt Figur 3 zugehörige Intensitätswerte, d.h. die jeweilige Amplitude des von dem Lichtempfänger 32 erzeugten Empfangssignals bei der Reflexion oder Remission, aus welcher der Abstandswert bestimmt wurde. Sowohl im oberen als auch im unteren Teil der Figur 3 sind jeweils mit durchgezogenen Linien die eigentlichen Messkurven und mit gestrichelten Linien eine vorab in einer Leerkalibration bei leerem Behälter 14 bestimmte Leerkurve als Referenz dargestellt. Figur 4 zeigt ganz entsprechend zu Figur 3 die durch die Leerkurve korrigierten Messkurven, konkret als Differenz zwischen jeweiliger Messkurve und Leerkurve.

Die Auswertungseinheit 34 erkennt eine gerichtete Reflexion oder Direktreflexion dort, wo die Abstandswerte größer sind als während der Leerkalibrierung, d.h. bei positiven Werten in dem korrigierten Abstandsprofil gemäß Figur 4. Der Abstandswert einer Direktreflexion kann unmittelbar als eine Füllstandsmessung verwertet werden. In Figur 4 zeigt sich ein sehr deutliches Maximum 36 bei 0°, also dem senkrecht auftreffenden Sendelichtstrahl 18. Es spielt aber keine Rolle, ob sich dieses Maximum durch Dejustage oder Wellenbildung gegenüber 0° verschiebt, da es auch bei anderen Winkeln zweifelsfrei erkannt würde. Wenn ein solches Maximum 36 existiert, bestimmt es vorzugsweise die Füllstandsmessung oder trägt zumindest mit erheblichem Gewicht bei.

Es gibt aber auch die Möglichkeit, dass weitere positive Werte beziehungsweise lokale Maxima existieren, die dann jeweils weiteren Direktreflexionen entsprechen und deshalb weitere Füllstandsmessungen sind. Dann wird vorzugsweise in der Auswertungseinheit 34 für die auszugebende Füllstandsmessung ein Mittelwert über die Abstände der Direktreflexionen gebildet. Die Suche nach Direktreflexionen wird auf einen Winkelbereich beschränkt, in dem das Medium 12 tatsächlich liegen kann, also beispielsweise auf den Winkel, innerhalb dessen der Boden des Behälters 14 oder äußerstenfalls noch die Oberfläche 16 bei größtmöglichem Füllstand liegt.

Ein weiteres Kriterium ist die Intensität gemäß dem oberen Teil der Figuren 3 und 4. Pulse höherer Intensität haben einen größeren Signal-Rausch-Abstand und liefern deshalb genauere Messergebnisse. Auch in dem Intensitätsverlauf zeigt sich ein deutliches Maximum 38 bei 0°, was die Erkennung der senkrechten Direktreflexion bei diesem Winkel nochmals stützt. Eine weitere Möglichkeit, die Messinformation der Intensität zu berücksichtigen, ist eine mit der Intensität gewichtete Mittelung der Abstände von Direktreflexionen. Damit wird der höheren Messgenauigkeit an Messpunkten mit hoher Intensität Rechnung getragen.

Es enthalten aber nicht nur Messpunkte eine Füllstandsinformation, in denen eine Direktreflexion erkannt wird. Wenn das Medium 12 diffus remittiert, gelangt auch ohne Direktreflexion Licht zum Lichtempfänger 32. Da dennoch jeweils in den Winkeln mit Direktreflexion die Remission maximal ist, kann dieser Fall weitgehend gleichbehandelt werden wie die Direktreflexion. Interessanter ist der Fall eines klaren oder durchsichtigen Mediums 12. Hier stammt das erfasste Signal in Winkeln ohne Direktreflexion von den Wänden oder dem Boden des Behälters 14.

Anstelle des negativen Kriteriums, dass Behälterreflexionen überall dort auftreten, wo es keine Direktreflexion gibt, lässt sich auch positiv definieren, dass Behälterreflexionen negativen Werten der Abstandsprofile nach Korrektur durch die Leerkurven entsprechen. An sich sind negative Werte nicht denkbar, denn der Behälter 14 begrenzt die maximal gemessenen Abstände. Grund für solche Messwerte ist eine in dem Medium 12 verringerte Lichtgeschwindigkeit.

Ist folglich bekannt, wie stark das Medium 12 die Lichtgeschwindigkeit verzögert, so kann aus den Behälterreflexionen ebenfalls der Füllstand berechnet werden. Dabei ist wie bei den Direktreflexionen auch hier eine Mittelung über Behälterreflexionen von mehreren Winkeln denkbar.

Der notwendige Korrekturfaktor für die Verzögerung der Lichtgeschwindigkeit folgt aus der optischen Dichte beziehungsweise dem Brechungsindex des Mediums 12 und gegebenenfalls auf Geometrieeigenschaften des Behälters 14, etwa wenn dieser keinen ebenen Boden aufweist. Der Korrekturfaktor kann vorab parametriert oder eingelernt werden. Es ist aber auch möglich, diesen Korrekturfaktor zu berechnen, nämlich in einer Situation, in der sowohl Direktreflexionen als auch Behälterreflexionen aufgenommen wurden. Dann wird die Messung des Füllstands aus Behälterreflexionen quasi mit dem aus den Direktreflexionen bekannten Füllstand umgekehrt, um den Korrekturfaktor aufzufinden.

Somit ergeben sich aus den Messdaten des Füllstandssensors 10 zwei unterschiedliche Messungen für den Füllstand aus Direktreflexionen und Behälterreflexionen. Sofern eine Direktreflexion erkannt werden kann, sollte vorzugsweise der Füllstand maßgeblich hierauf basieren, weil der Messwert genauer ist als derjenige, der aus Behälterreflexionen bestimmt wird. Wenn aber keine Direktreflexion erkannt wird, beispielsweise wegen eines besonders ungünstigen Wellenbildes, wird stattdessen der aus Behälterreflexionen bestimmte Füllstandswert verwendet. Außerdem kann dieser Füllstandswert stets zur Plausibilisierung oder Korrektur des Füllstandswerts aus Direktreflexionen genutzt werden.

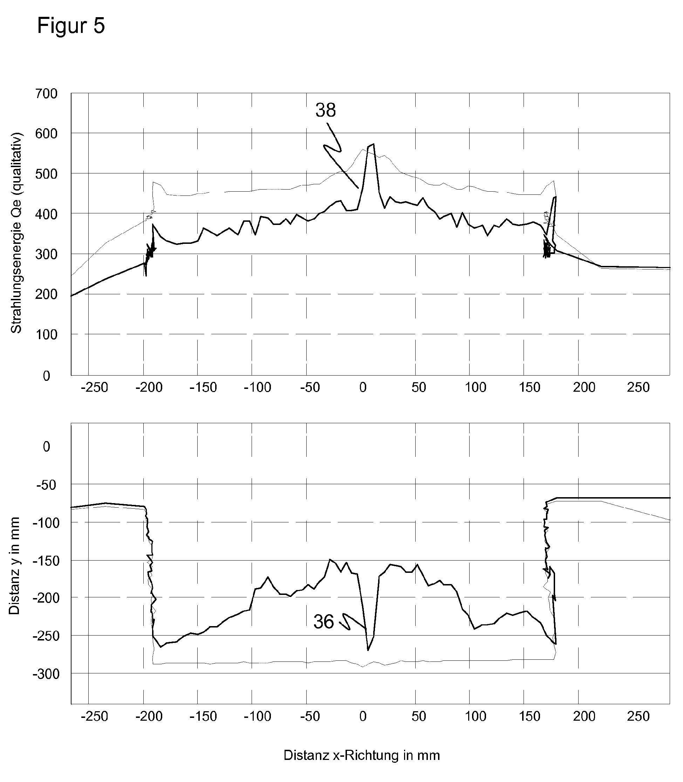

Figur 5 zeigt noch ein weiteres Beispiel eines Abstandsprofils und zugehöriger Intensitätswerte ähnlich den Figuren 3 und 4. Bei dieser Messung befand sich oberhalb des Mediums 12 eine Störschicht, beispielsweise Schaum auf dem Medium 12 oder Tröpfchenbildung beziehungsweise Kondensat auf einer Frontscheibe des Füllstandssensors 10. Dadurch wird die Messung gestört, und Abstandswerte werden auch außerhalb von Direktreflexionen größer als während der Leerkalibration. Zugleich sind die zugehörigen Intensitätswerte kleiner als während der Leerkalibration. In einem solchen Fall sind die Werte außerhalb von Direktreflexionen keine Behälterreflexionen und unbrauchbar. Die Füllstandsmessung sollte deshalb in diesem Fall allein auf den Direktreflexionen basieren, also dem Extremum 36, das hier ein Minimum wird, weil einzig in der Direktreflexion das Signal noch von der Oberfläche 16 und überall sonst von der darüberliegenden Störschicht stammt. Die Messdaten der Störschicht lassen sich aber optional noch verwenden, um Art und Dicke der Störschicht zu schätzen und damit die Lichtlaufzeit in der Direktreflexion zu korrigieren.

## Patentansprüche

1. Optoelektronischer Füllstandssensor (12) zur Bestimmung eines Füllstands einer klaren Flüssigkeit (12) in einem Behälter (14), wobei der Füllstandssensor (10) mindestens einen Lichtsender (20) zum Aussenden eines Sendelichtstrahls (18) in Richtung der Flüssigkeit (12) und mindestens einen Lichtempfänger (30) zum Erzeugen eines Empfangssignals aus in dem Behälter (14) zurückgeworfenem Licht (28) sowie eine Auswertungseinheit (30) aufweist, die dafür ausgebildet ist, aus dem Empfangssignal mit Hilfe eines Lichtlaufzeitverfahrens den jeweiligen Abstand des Füllstandssensors (10) zu mehreren Messpunkten in dem Behälter (14) zu bestimmen,
**dadurch gekennzeichnet,**
**dass** die Auswertungseinheit (30) weiterhin dafür ausgebildet ist, aus den Abständen zu den Messpunkten ein positionsabhängiges Abstandsprofil zu bestimmen, mindestens eine Direktreflexion (36) an einer Oberfläche (16) der Flüssigkeit (12) als Extremum in dem Abstandsprofil und/oder mindestens eine Behälterreflexion an dem Behälter (14) als einen Abstand größer als einen durch die Geometrie des Behälters (14) vorgegebenen Maximalabstand zu erkennen, der aus einem Einlernvorgang resultiert, in dem bei leerem Behälter (14) eine Leerkurve als Referenz für im Betrieb bestimmte Abstände oder Abstandsprofle ermittelt wird, und den Füllstand anhand der Direktreflexion (36) und/oder der Behälterreflexion zu bestimmen.

2. Füllstandssensor (10) nach Anspruch 1,
der als Laserscanner mit einer beweglichen Ablenkeinheit (24a-b) zur periodischen Ablenkung des Sendelichtstrahls (18) in dem Behälter (14) und einer Winkelmesseinheit zur Erzeugung von Winkelpositionssignalen in Abhängigkeit von einer Winkelstellung der Ablenkeinheit (24a-b) ausgebildet ist.

3. Füllstandssensor (10) nach einem der vorhergehenden Ansprüche,
wobei die Auswertungseinheit (30) dafür ausgebildet ist, aus dem Empfangssignal eine jeweilige Intensität zu den mehreren Messpunkten zu bestimmen und den Füllstand als mit den Intensitäten gewichteten Mittelwert der Abstände bei den Direktrefiexionen (36) zu bestimmen.

4. Füllstandssensor (10) nach einem der vorhergehenden Ansprüche,
wobei die Auswertungseinheit (30) dafür ausgebildet ist, anhand von mindestens einer Direktreflexion (36) und mindestens einer Behälterreflexion den Brechungsindex der Flüssigkeit (12) zu berechnen.

5. Füllstandssensor (10) nach einem der vorhergehenden Ansprüche,
wobei die Auswertungseinheit (30) dafür ausgebildet ist, den Füllstand aus einer Behälterreflexion und dem Brechungsindex der Flüssigkeit (12) zu bestimmen.

6. Füllstandssensor (10) nach einem der vorhergehenden Ansprüche,
wobei die Auswertungseinheit (30) dafür ausgebildet ist, eine Verunreinigung im optischen Pfad bis zu einer Oberfläche (16) der Flüssigkeit (12) daran zu erkennen, dass bei einem Messpunkt außerhalb einer Direktreflexion der Abstand kleiner ist, als ein durch die Geometrie vorgegebener Mindestabstand.

7. Verfahren zur optischen Bestimmung eines Füllstands einer klaren Flüssigkeit (12) in einem Behälter (14), wobei ein Sendelichtstrahl (18) in Richtung der Flüssigkeit (12) ausgesandt und aus in dem Behälter (14) zurückgeworfenem Licht (28) ein Empfangssignal erzeugt wird, aus welchem mit Hilfe eines Lichtlaufzeitverfahrens ein jeweiliger Abstand zu mehreren Messpunkten in dem Behälter (14) bestimmt wird,
**dadurch gekennzeichnet,**
**dass** aus den Abständen zu den Messpunkten ein positionsabhängiges Abstandsprofil bestimmt wird, dass mindestens eine Direktreflexion (36) an einer Oberfläche (16) der Flüssigkeit (12) als Extremum in dem Abstandsprofil und/oder mindestens eine Behälterreflexion an dem Behälter (14) als ein Abstand größer als ein durch die Geometrie des Behälters (14) vorgegebener Maximalabstand erkannt wird, der aus einem Einlernvorgang resultiert, in dem bei leerem Behälter (14) eine Leerkurve als Referenz für im Betrieb bestimmte Abstände oder Abstandsprofile ermittelt wird, und dass der Füllstand anhand der Direktreflexion (36) und/oder der Behälterreflexion bestimmt wird.

## Claims

1. An optoelectronic filling level sensor (10) for determining a filling level of a clear liquid (12) in a container (14), wherein the filling level sensor (10) comprises at least one light transmitter (20) for transmitting a transmission light beam (18) in the direction of the liquid (12) and at least one light receiver (30) for generating a reception signal from light (28) returned in the container (14) as well as an evaluation unit (30) which is configured to determine the respective distance of the filling level sensor (10) to several measurement points in the container (14) from the reception signal based on a light time of flight method,
**characterized in that** the evaluation unit (30) is further configured to determine a position-dependent distance profile from the distances to the measurement points, to detect at least one direct reflection (36) at a surface (16) of the liquid (12) as an extremum in the distance profile and/or at least one container reflection at the container (14) as a distance larger than a maximal distance given by the geometry of the container (14) and resulting from a teach process where a blank curve is determined in the empty container (14) as a reference for distances or distance profiles detected during operation, and to determine the filling level based on the direct reflection (36) and/or the container reflection.

2. The filling level sensor (10) according to claim 1,
which is configured as a laser scanner having a movable deflection unit (24a-b) for periodically deflecting the transmission light beam (18) in the container (14) and having an angle measurement unit for generating angular position signals in dependence on an angular position of the deflection unit (24a-b).

3. The filling level sensor (10) according to any of the preceding claims,
wherein the evaluation unit (30) is configured to determine a respective intensity for the several measurement points from the reception signal and to determine the filling level as a weighted average of the distances at the direct reflections (36) based on the intensities.

4. The filling level sensor (10) according to any of the preceding claims,
wherein the evaluation unit (30) is configured to calculate the refractive index of the liquid based on at least one direct reflection (36) and at least one container reflection.

5. The filling level sensor (10) according to any of the preceding claims,
wherein the evaluation unit (30) is configured to determine the filling level from a container reflection and the refractive index of the liquid (12).

6. The filling level sensor (10) according to any of the preceding claims,
wherein the evaluation unit (30) is configured to detect a contamination in the optical path up to a surface (16) of the liquid (12) in that the distance for a measurement point outside a direct reflection (36) is smaller than a minimum distance given by the geometry.

7. A method for an optical determination of the filling level of a clear liquid (12) in a container (14), wherein a transmission light beam (18) is transmitted in the direction of the liquid (12) and a reception signal is generated from light (28) returned in the container (14) and a respective distance to several measurement points in the container (14) is determined from the reception signal based on a light time of flight method,
**characterized in that** a position-dependent distance profile is determined from the distances to the measurement points, **in that** at least one direct reflection (36) at a surface (16) of the liquid (12) is detected as an extremum in the distance profile and/or at least one container reflection at the container (14) is detected as a distance larger than a maximal distance given by the geometry of the container (14) and resulting from a teach process where a blank curve is determined in the empty container (14) as a reference for distances or distance profiles detected during operation, and **in that** the filling level is determined based on the direct reflection (36) and/or the container reflection.

## Revendications

1. Capteur de niveau de remplissage optoélectronique (12) pour déterminer un niveau de remplissage d'un liquide clair (12) dans un récipient (14), dans lequel le capteur de niveau de remplissage (10) comprend au moins un émetteur de lumière (20) pour émettre un rayon de lumière émise (18) en direction du liquide (12) et comprend au moins un récepteur de lumière (30) pour engendrer un signal de réception à partir de la lumière (28) renvoyée dans le récipient (14), ainsi qu'une unité d'évaluation (30) qui est réalisée pour déterminer, à partir du signal de réception et avec l'aide d'une procédure à temps de parcours de la lumière, la distance respective du capteur de niveau de remplissage (10) par rapport à plusieurs points de mesure dans le récipient (14),
**caractérisé en ce que**
l'unité d'évaluation (30) est en outre réalisée pour déterminer à partir des distances jusqu'au point de mesure un profil de distance indépendant de la position, pour reconnaître au moins une réflexion directe (36) au niveau d'une surface (16) du liquide (12) comme étant une valeur extrême dans le profil de distance et/ou au moins une réflexion au niveau du récipient (14) comme étant une distance plus grande qu'une distance maximum imposée par la géométrie du récipient (14) et qui résulte d'un processus d'apprentissage dans lequel, lorsque le récipient est vide (14), une courbe à vide est déterminée à titre de référence pour des distances ou des profils de distance déterminé(e)s en fonctionnement, et pour déterminer le niveau de remplissage au moyen de la réflexion directe (36) et/ou de la réflexion au niveau du récipient.

2. Capteur de niveau de remplissage (10) selon la revendication 1,
qui est réalisé sous forme de scanner à laser avec une unité de déflexion mobile (24a-b) pour défléchir périodiquement le rayon de lumière émise (18) dans le récipient (14) et comprend une unité de mesure angulaire pour engendrer des signaux de position angulaire en fonction d'une situation angulaire de l'unité de déflexion (24a-b).

3. Capteur de niveau de remplissage (10) selon l'une des revendications précédentes,
dans lequel l'unité d'évaluation (30) est réalisée pour déterminer à partir du signal de réception une intensité respective vers les plusieurs points de mesure, et pour déterminer le niveau de remplissage comme étant la valeur moyenne pondérée avec les intensités des distances pour les réflexions directes (36).

4. Capteur de niveau de remplissage (10) selon l'une des revendications précédentes,
dans lequel l'unité d'évaluation (30) est réalisée pour calculer, au moyen d'au moins une réflexion directe (36) et d'au moins une réflexion au niveau du récipient, l'indice de réfraction du liquide (12).

5. Capteur de niveau de remplissage (10) selon l'une des revendications précédentes,
dans lequel l'unité d'évaluation (30) est réalisée pour déterminer le niveau de remplissage à partir d'une réflexion au niveau du récipient et de l'indice de réfraction du liquide (12).

6. Capteur de niveau de remplissage (10) selon l'une des revendications précédentes,
dans lequel l'unité d'évaluation (30) est réalisée pour reconnaître un l'encrassement dans le trajet optique jusqu'à une surface (16) du liquide (12) au fait que pour un point de mesure à l'extérieur d'une réflexion directe la distance est plus petite qu'une distance minimum imposée par la géométrie.

7. Procédé pour la détermination optique d'un niveau de remplissage d'un liquide clair (12) dans un récipient (14), dans lequel un rayon de lumière émise (18) est émis en direction du liquide (12), et un signal de réception est engendré à partir de la lumière (28) renvoyée dans le récipient (14), signal de réception à partir duquel une distance respective vers plusieurs points de mesure dans le récipient (14) est déterminée avec l'aide d'une procédure à temps de parcours de la lumière,
**caractérisé en ce que**
un profil de distance indépendant de la position est déterminé à partir des distances jusqu'aux points de mesure, **en ce qu'**au moins une réflexion directe (36) sur une surface (16) du liquide (12) est reconnue à titre de valeur extrême dans le profil de distance et/ou au moins une réflexion au niveau du récipient (14) est reconnue comme étant une distance plus grande qu'une distance maximum imposée par la géométrie du récipient (14) et qui résulte d'un processus d'apprentissage dans lequel, lorsque le récipient est vide (14), une courbe à vide est déterminée à titre de référence pour des distances ou des profils de distance déterminé(e)s en fonctionnement, et **en ce que** le niveau de remplissage est déterminé au moyen de la réflexion directe (36) et/ou au moyen de la réflexion au niveau du récipient.
